# EUROPEAN PATENT SPECIFICATION

(11) **EP 2 167 557 B1**
(45) Date of publication and mention of the grant of the patent: **07.01.2015**
(21) Application number: 08772275.7
(22) Date of filing: 30.06.2008
(51) Int. Cl.: C08F 257/02, C08L 51/00, C08F 279/02, B60C 1/00

(54) **ONE-POT SYNTHESIS OF NANOPARTICLES AND LIQUID POLYMER FOR RUBBER APPLICATIONS**
HERSTELLUNG VON NANOTEILCHEN UND FLÜSSIGPOLYMEREN FÜR KAUTSCHUK VERWENDUNGEN.
SYNTHÈSE ONE-POT DE NANOPARTICULES ET DE POLYMÈRE LIQUIDE POUR DES APPLICATIONS DE CAOUTCHOUC

(30) Priority: 29.06.2007 US 771659
(43) Date of publication of application: 31.03.2010
(73) Proprietor: Bridgestone Corporation, Tokyo 104-8340 (JP)
(72) Inventor: WARREN, Sandra, 33170 Gradignan (FR); WANG, Xiaorong, Hudson, OH 44236 (US)
(74) Representative: Adam, Holger
(86) International application number: PCT/US2008/068838
(87) International publication number: WO 2009/006434

(56) References cited:
- EP-A- 0 540 942
- WO-A-03/085040
- US-A- 4 942 209
- US-A- 5 847 054
- US-A1- 2007 196 653
- US-A1- 2008 149 238

## Description

### FIELD

The technology discussed herein relates generally to rubber compositions. In particular, it relates to methods for synthesizing nanoparticle and liquid polymer blends in a single polymerization reaction vessel.

### BACKGROUND

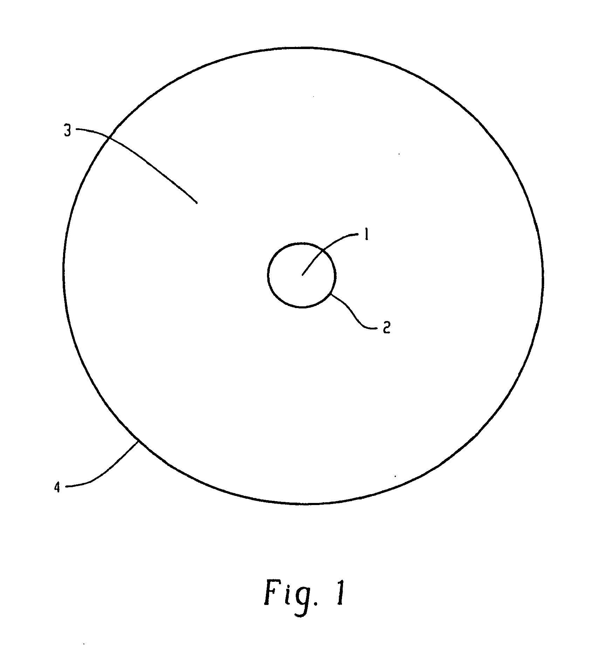

As depicted in the example shown in Fig. 1, the nanoparticles described herein are each made up of a group or a collection of several polymer chains that are organized around a center 1. The polymer chains are linked together at one end at a core formed from cross-linked monomer units on each polymer chain. The polymer chains extend from the core 2 outwardly to form a shell 3. The shell 3 includes the monomer units and optionally co-monomer units of the polymers that are not in the core 2. It should be understood that the shell 3 is not limited to a single monomer unit in each polymer chain, but may include several monomer units. Additionally, the shell 3 may be separated into sublayers, and the sublayers may include blocks of various homopolymer or copolymer. For example, a sublayer may include a block of randomized styrene-butadiene copolymer or a homopolymer such as butadiene. The outermost layer portion of the shell 4, is comprised of the monomer units or functionally or non-functionally initiated polymer chain heads at the outer terminal ends of each polymer. The shell 4 is the outermost portion of the nanoparticle. The living polymer chains form micelles due to the aggregation of ionic chain ends and the chemical interactions of the polymer chains in hydrocarbon solvent. When the cross-linking agent is added, the polymer chains forming the micelle(s) become crosslinked and the stable nanoparticle(s) is formed.

Nanoparticles and liquid polymers for use in rubber compositions are described in commonly owned U.S. patent application 11/305,279.

Further nanoparticle preparations have been described in US 2008/0149238 A1, WO 03/085040 A2, US 5,847,054 B as well as US 2007/0196653 A1. The combination of nanoparticle and liquid polymer improves important properties of rubber articles, such as vehicle tires, and in particular, the tread portion of vehicle tires. For example, wet/dry traction and rolling resistance of tire tread can be improved with the addition of nanoparticles and liquid polymers while maintaining good reinforcement for tread durability. A reduction or elimination of the amount of processing oils used in a composition for vehicle tires is desirable, and this is made possible by use of combination of nanoparticles and liquid polymer in such compositions.

However, there are difficulties in synthesizing and processing the previously disclosed nanoparticles and liquid polymers. Previously known methods involve synthesizing nanoparticles and liquid polymer separately, drying them separately, and then separately adding each component into a rubber composition. Processing problems stem from the fact that the liquid polymer is a highly viscous substance that is very difficult to remove from solvent and dry. Additionally, the nanoparticles and liquid polymer are stored separately, thereby consuming valuable inventory space.

### SUMMARY

The technology disclosed herein provides for the synthesis of nanoparticles and liquid polymer in the same reaction vessel, without the removal of either the nanoparticles or liquid polymer (hereinafter "one-pot synthesis"). The resulting blend is easier to process and dry than a separately synthesized liquid polymer. The blend also facilitates dispersion of the nanoparticles in a rubber composition An additional benefit is a savings in inventory space for the nanoparticle/liquid polymer blend, as opposed to the individual components.

A method for performing a one-pol synthesis of a blend of nanoparticles and liquid polymer includes , in accordance with claim 1, polymerizing a first monomer and optionally a second monomer in a hydrocarbon solvent to form the liquid polymer. The polymerization is partially quenched or terminated with a quenching agent. A quenching agent may also be referred to as a terminating agent, and the terms are used interchangeably herein. Then a charge of polymerization initiator, cross-linking agent and mono-vinyl aromatic monomer arc added. This initiates further polymerization whereby nanoparticles are formed in situ having a core including the multiple-vinyl aromatic monomer, and a shell including the first monomer or the first monomer and the second monomer.

A composition of matter consists essentially of a blend of core-shell type nanoparticles and a liquid polymer. The nanoparticles are dispersed and blended within the liquid polymer.

The blends of nanoparticle and liquid polymer made by the methods disclosed herein may be added to a rubber composition to produce a nanoparticle/liquid polymer rubber composition. As an example, a tire that incorporates the nanoparticle/liquid polymer rubber composition can be formed by a tire tread comprising the rubber composition, and constructing a tire using the tire tread.

### BRIEF DESCRIPTION OF THE DRAWINGS

Fig. 1 shows a diagram of an example nanoparticle.

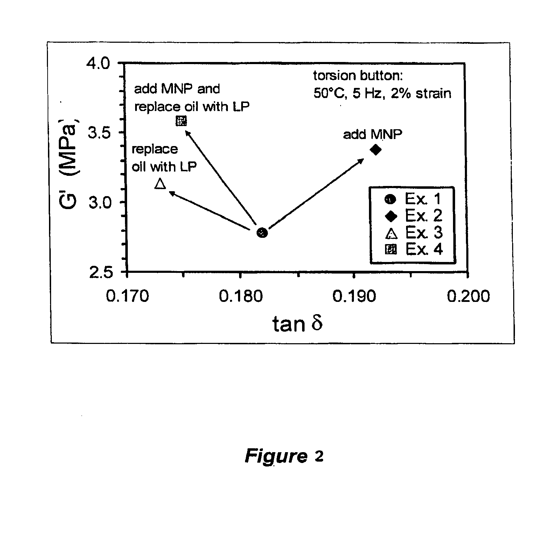

Fig. 2 shows a rubber article with improved reinforcement and controllable hysteresis in an embodiment of the present invention.

### DETAILED DESCRIPTION

Methods for performing a one-pot synthesis for making a blend of nanoparticles and liquid polymer are disclosed herein. A first illustrative method involves polymerization of the liquid polymer, wherein a first monomer and optionally a second monomer are polymerized in a hydrocarbon solvent in a reaction vessel. The polymerization is allowed to proceed, and is then partially quenched (terminated) with a quenching agent. The amount of terminated polymer chains can vary according to the application. The amount of terminated polymer chains may be about 1-99 wt % of total polymer chains in the reaction vessel, alternatively about 15-85 wt%, or alternatively about 30-75wt%.

As part of this example method, in a second step an addition of polymerization initiator and a mixture of cross-linking agent and a mono-vinyl aromatic monomer are added to the reaction vessel containing the liquid polymer. In this step, living polymer chains remaining from the liquid polymer synthesis step copolymerize with the mono-vinyl aromatic monomer. The resulting copolymers assemble into micelle structures in the hydrocarbon solvent. The cross-linking agent functions to cross-link the micelles resulting in nanoparticles.

As used herein, unless otherwise stated, a charge or addition of material, including monomer, into the reaction vessel may be simultaneous or stepwise. Stepwise means that either the addition of one ingredient is completed before the addition of another ingredient is begun, or the addition of one ingredient is begun (but not necessarily completed) before the addition of another ingredient.

A second illustrative method involves a liquid polymerization step as described above. However, in this method the nanoparticle synthesis process differs in that there is a step-wise addition of mono-vinyl aromatic monomer, followed by the addition of cross-linking agent and initiator to the pot. The resulting copolymers self-assemble into core-shell type micelles in the hydrocarbon solvent, and the cross-linking agent functions to cross-link the micelles, resulting in the formation of nanoparticles.

The nanoparticles that result from the first method and the second method can have differing physical properties. Under similar conditions, the first method results in polymer nanoparticles with a core relatively less densely crosslinked, but crosslinked throughout the entire core , while the second method results in polymer nanoparticles with a core densely crosslinked at the center of the core.

The cross-linking density can be defined as the number of crosslinks per monomer (Xd). In an example where the nanoparticle comprises styrene and divinyl benzene (DVB), the Xd is determined by the ratio of moles of DVB to moles of DVB and styrene. This number may range from 0.01 to 1, for example 0.1 to 0.8, such as 0.2 to 0.4. In the example first method described above the cross-linking density may be 0.2-0.4, for example 0.3, and in the example second method described above the cross-linking density may be 0.8-1.0, for example 0.9.

The one-pot synthesis processes described herein yield a nanoparticle/liquid polymer blend that is easier to process and dry compared to the synthesis of those materials separately. The resulting blends also save inventory space for manufacturers of products incorporating such blends.

The first step of the methods described above results in the polymerization of the liquid polymer. A first monomer, and optionally a second monomer, are added to a reaction vessel along with an anionic initiator to start the polymerization of the monomer(s), resulting in a liquid polymer. The liquid polymer may comprise a homopolymer, such as polybutadiene, or a copolymer, such as styrene-butadiene.

The first monomer may be any monomer capable of being anionically polymerized. The first monomer may be selected from one or more of conjugated diene monomers. In one embodiment, the first monomer is selected from C₄-C₈ conjugated diene monomers. Specific examples of the conjugated diene monomers include, but are not limited to, 1,3-butadiene, isoprene (2-methyl-1,3-butadiene), cis-and trans-piperylene (1,3-pentadiene), 2,3-dimethyl-1,3-butadiene, 1,3-pentadiene, cis- and trans-1,3,hexadiene, cis- and trans-2-methyl- 1,3-pentadiene, cis- and trans-3-methyl-1,3-pentadiene, 4-methyl-1,3- pentadiene, 2,4-dimethyl-1,3-pentadiene, and the like, and the mixture thereof. In exemplary embodiments, isoprene or 1,3-butadiene or mixtures thereof are used as the conjugated diene monomer(s).

The optional second monomer may be a vinyl aromatic monomer, and may be selected from the group consisting of styrene, ethylvinylbenzene, a-methyl-styrene, 1-vinyl naphthalene, 2-vinyl naphthalene, vinyl toluene, methoxystyrene, t-butoxystyrene, and the like; as well as alkyl, cycloalkyl, aryl, alkaryl, and aralkyl derivatives thereof, in which the total number of carbon atoms in the monomer is generally not greater than about 20; and mixtures thereof. In exemplary embodiments, the conjugated diene monomer and vinyl aromatic monomer are normally used at the weight ratios of from about 99:1 to about 1:99, or from about 30:70 to about 90:10, or from about 85:15 to about 60:40.

In one or more embodiments, the anionic initiator employed is a functional initiator that imparts a functional group at the head of the polymer chain (i.e., the location from which the polymer chain is started). In certain embodiments, the functional group includes one or more heteroatoms (e.g., nitrogen, oxygen, boron, silicon, sulfur, tin, and phosphorus atoms) or heterocyclic groups.

Exemplary anionic initiators include organolithium compounds. In one or more embodiments, organolithium compounds may include heteroatoms. In these or other embodiments, organolithium compounds may include one or more heterocyclic groups.

Types of organolithium compounds include alkyllithium, aryllithium compounds, and cycloalkyllithium compounds. Specific examples of organolithium compounds include ethyllithium, n-propyllithium, isopropyllithium, n-butyllithium, sec-butyllithium, t-butyllithium, n-amyllithium, isoamyllithium, and phenyllithium. Other examples include alkylmagnesium halide compounds such as butylmagnesium bromide and phenylmagnesium bromide. Still other anionic initiators include organosodium compounds such as phenylsodium and 2,4,6-trimethylphenylsodium. Also contemplated are those anionic initiators that give rise to di-living polymers, wherein both ends of polymer chain is living. Examples of such initiators include dilithio initiators such as those prepared by reacting 1,3-diisopropenylbenzene with sec-butyllithium. These and related difunctional initiators are disclosed in U.S. Pat. No. 3,652,516.

Radical anionic initiators may also be employed, including those described in U.S. Pat. No. 5,552,483.

In particular embodiments, the organolithium compounds include a cyclic amine-containing compound such as lithiohexamethyleneimine. These and related useful initiators are disclosed in the U.S. Pat. Nos. 5,332,810, 5,329,005, 5,578,542, 5,393,721, 5,698,646, 5,491,230, 5,521,309, 5,496,940, 5,574,109, and 5,786,441. In other embodiments, the organolithium compounds include alkylthioacetals such as 2-lithio-2-methyl-1,3-dithiane. These and related useful initiators are disclosed in U.S. Publ. Nos. 2006/0030657, 2006/0264590, and 2006/0264589.

In still other embodiments, the organolithium compounds include alkoxysilyl-containing initiators, such as lithiated t-butyldimethylpropoxysilane. These and related useful initiators are disclosed in U.S. Publ. No. 2006/0241241.

In one or more embodiments, the anionic initiator employed is trialkyltinlithium compound such as tri-n-butyltinlithium. These and related useful) initiators are disclosed in U.S. Pal. Nos. 3,426,006 and 5,268,439.

Optionally, the liquid polymer synthesis step may be conducted in the presence of a modifier or a 1,2-microstructure controlling agent, so as to, for example, increase the reaction rate, equalize the reactivity ratio of monomers, and/or control the 1,2-microstructure in the conjugated diene monomers. Suitable modifiers include, but are not limited to, triethylamine; tri-n-butylamine, hexamethylphosphoric acid triamide, N, N, N', N'-tetramelhylethylene diamine, ethylene glycol dimethyl ether, diethylene glycol dimethyl ether, triethylene glycol dimethyl ether, tetraethylene glycol dimethyl ether, tetrahydrofuran, 1,4-diazabicyclo [2.2.2] octane, diethyl ether, tri-n-butylphosphine, p-dioxane, 1,2 dimcthoxy ethane, dimethyl ether, methyl ethyl ether, ethyl propyl ether, di-n-propyl ether, di-n-actyl ether, anisole, dibenzyl ether, diphenyl ether, dimethylethylamine, bix-oxolanyl propane, tri-n-propyl amine, trimethyl amine, triethyl amine, N,N-dimethyl aniline, N-ethylpiperidine, N-methyl-N-ethyl aniline, N-methylmorpholine, tetramethylenediamine, oligomeric oxolanyl propanes (OOPs), 2,2-bis-(4-methyl dioxane), bistetrahydrofuryl propane, and the like.

Other modifiers or 1,2-microstructure controlling agents used in the present invention may be linear oxolanyl oligomers represented by the structural formula (IV) and cyclic oligomers represented by the structural formula (V), as shown below:

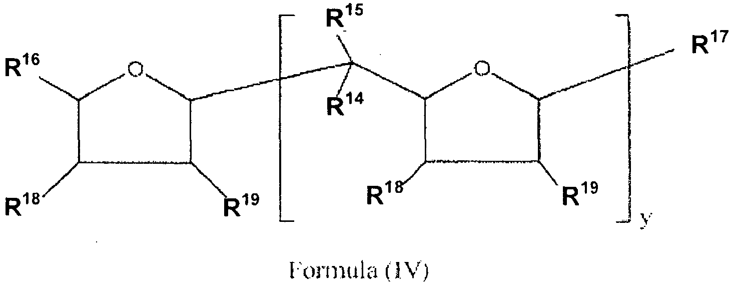

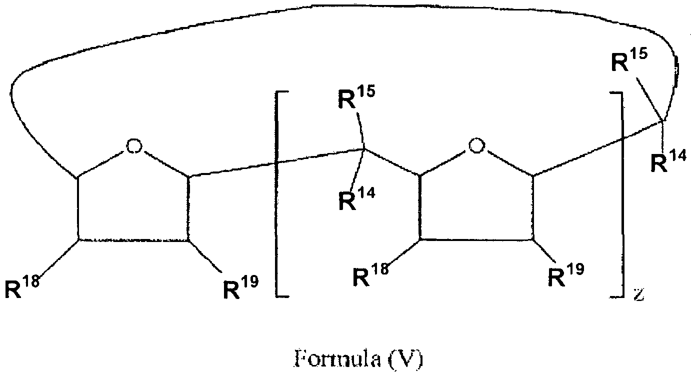

wherein R¹⁴ and R¹⁵ are independently hydrogen or a C₁-C₈ alkyl group; R¹⁶, R¹⁷, R¹⁸, and R¹⁹ are independently hydrogen or a C₁-C₆ alkyl group; y is an integer of 1 to 5 inclusive, and z is an integer of 3 to 5 inclusive.

Specific examples of modifiers or 1,2-microstructure controlling agents include, but are not limited to, oligomeric oxolanyl propanes (OOPs); 2,2-bis-(4-methyl dioxane); bis(2-oxolanyl) methane; 1,1-bis(2-oxolanyl) ethane; bistetrahydrofuryl propane; 2,2-bis(2-oxolanyl) propane; 2,2-bis(5-methyl-2-oxolanyl) propane; 2,2-bis-(3,4,5-trimethyl-2-oxolanyl) propane; 2,5-bis(2-oxolanyl-2-propyl) oxolane; octamethyl perhydrocyclotetrafurfurylene (cyclic tetramer); 2,2-bis(2-oxolanyl) butane; and the like. A mixture of two or more modifiers or 1,2-microstructure controlling agents also can be used.

After the reaction has had time to proceed to form the liquid polymer, a quenching agent is added in an amount that results in partial quenching (termination) of the living polymer. By partial termination, living (un-terminated) polymers remain, and are subsequently copolymerized to form the shell of the nanoparticle in the subsequent nanoparticle synthesis step. The liquid polymer synthesis step is relatively fast, and may for example, be completed in about 15 minutes. As used herein, partial termination means less than 100% of the living polymer chains are terminated.

Suitable quenching agents include, but are not limited to, alcohols such as methanol, ethanol, propanol, and isopropanol. Optionally, a quenching agent may be employed to provide terminal functionality. Exemplary functionality-providing quenching agents include, but are not limited to, SnCl₄, R₃SnCl, R₂SnCl₂, RSnCl₃, carbodiimides, N-methylpyrrolidine, cyclic amides, cyclic ureas, isocyanates, Schiff bases, 4,4'-bis(diethylamino) benzophenone, N,N'-dimethylethyleneurea, and mixtures thereof, wherein R is selected from the group consisting of alkyls having from about 1 to about 20 carbon atoms, cycloalkyls having from about 3 to about 20 carbon atoms, aryls having from about 6 to about 20 carbon atoms, aralkyls having from about 7 to about 20 carbon atoms, and mixtures thereof.

The liquid polymer can be made by batch, semi-batch or continous processes. Typically, a hydrocarbon solvent is used, although it may be possible to use other solvents or combinations of solvents provided that the solvent/combination would not interfere in the formation of the micelles. The hydrocarbon solvent may be selected from any suitable aliphatic hydrocarbons, alicyclic hydrocarbons, or mixture thereof, with a proviso that it exists in liquid state during the polymerizations. Exemplary aliphatic hydrocarbons include, but are not limited to, pentane, isopentane, 2,2 dimethyl-butane, hexane, heptane, octane, nonane, decane, mixtures of such hydrocarbons and the like. Exemplary alicyclic hydrocarbons include, but are not limited to, cyclopentane, methyl cyclopentane, cyclohexane, methyl cyclohexane, cycloheptane, cyclooctane, cyclononane, cyclodecane, and the like. In one embodiment, the liquid hydrocarbon medium comprises hexanes.

According to the process disclosed herein there are some advantages to synthesizing the liquid polymer in a batch process. However, it is also possible to perform the method described herein by a continuous process in a single reaction vessel. In a continuous process the monomers and an initiator are continuously fed into the reaction vessel with solvent.

The pressure in the reaction vessel should be sufficient to maintain a substantially liquid phase under the conditions of the polymerization reaction. The reaction medium may generally be maintained at a temperature that is within the range of about 20°C to about 140°C throughout the polymerization.

The liquid polymer may comprise polyisoprene, polybutadiene, styrene-butadiene copolymer, styrene-isoprene-butadiene copolymer, styrene-isoprene copolymer, butadiene-isoprene copolymer, liquid butyl rubber, liquid neoprene, ethylene-propylene copolymer, ethylene-propylene-diene copolymer, acrylonitrile-butadiene copolymer, liquid silicone, ethylene acrylic copolymer, ethylene vinyl acetate copolymer, liquid epichlorohydrin, liquid chlorinated polyethylene, liquid chlorosulfonated polyethylene rubbers, liquid hydrogenated nitrile rubber, liquid tetrafluoroethylene-propylene rubber, liquid hydrogenated polybutadiene and styrene-butadiene copolymer, and the like, and the mixture thereof.

In one embodiment, the number average molecular weight (Mn) of the resulting liquid polymer is within the range of from about 10,000 to about 120,000, within the range of from about 20,000 to about 110,000, or within the range of from about 25,000 to about 75,000. The weight average molecular weight of the liquid polymer can range from about 20,000 to 100,000, for example 70,000 to 90,000.

The glass transition temperature (Tg) of the liquid polymer is, for example, within the range of from about -100°C to about -20°C, such as within the range of from about -95°C to about -40°C, or from about -90°C to about -50°C. The liquid polymer may exhibit only one glass transition temperature.

Since the remaining polymers with living ends are later used to form the shell layer of the nanoparticles, the amount of quenching agent also determines the ratio of liquid polymer to nanoparticules in the nanoparticle/liquid polymer blend.

The formation of the liquid polymer is complete after the reaction is partially terminated with the quenching agent. In the illustrative methods described herein a charge is then added that begins the nanoparticle synthesis step.

In one embodiment, for the nanoparticle synthesis step an anionic initiator is first added to the reaction vessel (i.e. before adding the mono- and coupling agent). In other embodiments, the initiator can also be added at the same time as the mono-vinyl aromatic monomer and coupling agent. Anionic initiators may be those described above.

After addition of the initiator or concurrently with the addition of the initiator the mono-vinyl aromatic monomer and cross-linking agent are added to the same reaction vessel that the liquid polymer was formed in. The living polymer chains from the liquid polymer synthesis step copolymerize with the mono-vinyl aromatic monomer.. The copolymer chains then self-assemble in the hydrocarbon solvent into micelles. The cross-linking agent serves to cross-link the micelles resulting in nanoparticles.

Optionally, the nanoparticle synthesis step may be conducted in the presence of a modifier or a 1,2-microstructure controlling agent, such as those described above.

In one embodiment, the copolymers are di-block copolymers coinprising a polyconjugated diene block and a mono-vinyl aromatic block, such as poly(butadiene-b-styrene). The mono-vinyl aromatic blocks are typically at least partially crosslinked by the cross-linking agent. In one embodiment, the polymer nanoparticles retain their discrete nature with little or no polymerization between each other. In some embodiments, the nanoparticles arc substantially monomodal and uniform in shape, in others the nanoparticles have a polymodal size distribution.

The copolymerization of the nanoparticle chains may last as long as necessary until the desired monomer conversion, degree of polymerization (DP), and/or block polymer molecular weight are obtained. The polymerization reaction of this step may last typically from about 0.5 hours to about 20 hours, from about 0.5 hours to about 10 hours, or from about 0.5 hours to about 5 hours. The polymerization reaction of this step may be conducted at a temperature of from about -1°C (30°F) to about 149°C (300°F), from about 38°C (100°F) to about 121°C (250°F), or from about 66°C (150°F) to about 99°C (210°F).

The polymerization reaction used to prepare the polymer nanoparticles may be terminated with a quenching agent. Suitable quenching agents include those described above In exemplified embodiments, the nanoparticle reaction mixture was cooled and dropped in an isopropanol/acetone solution containing an antioxidant such as butylated hydroxytoluene (BHT). The isopropanol/acetone solution may be prepared, for example, by mixing 1 part by volume of isopropanol and 4 parts by volume of acetone.

In one embodiment, the nanoparticle synthesis is conducted in the same solvent as was used for the liquid polymer synthesis. During synthesis of the nanoparticles, the liquid polymer can also be considered a solvent. Without being bound to theory, it is believed that during the nanoparticle synthesis the liquid polymer also intercalates itself between the living polymer chains when they are in the micelle formation. This may result in the isolatation of the inside of the micelle from the hydrocarbon solvent. Consequently, the resulting micelle will be more stable and the chances of two or more micelles meeting each other and potentially linking, resulting in the creation of much larger particles, is decreased. The liquid polymer causes the resulting nanoparticle to swell, and the resulting mixture is softer and more easily mixed into rubber compositions.

Without being bound to theory, it is believed that during the nanoparticle synthesis the poly(conjugated diene) block is more soluble or miscible in a selected hydrocarbon solvent, than the mono-vinyl aromatic block. This facilitates the subsequent formation of micelles and ultimately nanoparticles, from the block copolymer chains.

Depending on their miscibility, polymer chains in a solution or suspension system can be self-assembled into domains of various structures. Without being bound to any theory, it is believed that a micelle-like structure may be formed by aggregating the block copolymer chains comprising the poly(conjugated diene) block and the aromatic block. The mono-vinyl aromatic blocks are typically directed toward the center of the micelle and the poly(conjugated diene) containing blocks are typically extended away from the center.

The nanoparticles are formed from cross-linked micelle structures having a core made from the mono-vinyl aromatic blocks, and a shell made from the poly(conjugated diene) containing blocks. It is believed that the cross-linking agents crosslink the center core of the micelle to stabilize and hold together the nanoparticles.

In one example the liquid polymer of the nanoparticle/liquid polymer blend is a styrene-butadiene copolymer. The styrene-butadiene has an Mn of about 80,000 to 120,000 and is comprised of repeat units that are derived from about 5 weight percent to about 95 weight percent styrene and correspondingly from about 5 weight percent to about 95 weight percent 1,3-butadiene, wherein the repeat units derived from styrene and 1,3-butadiene are in essentially random order. In this example, in the liquid polymerization process of the illustrative methods, the first monomer is styrene and the second monomer is butadiene. Vinyl percentages of 50-60 % are preferred for some applications because this range results in a compatible liquid polymer/nanoparticle phases. However, lower vinyl levels are also possible.

In another example, the liquid polymer comprises a liquid isoprene-butadiene rubber (IBR) with Mn of about 35,000 to 70,000, which is comprised of repeat units that are derived from about 5 weight percent to about 95 weight percent isoprene and correspondingly from about 5 weight percent to about 95 weight percent 1,3-butadiene, wherein the repeat units derived from isoprene and 1,3-butadiene are in essentially random order. In this example, the first monomer is isoprene and the second monomer is butadiene according to the illustrative methods described above.

The polymer nanoparticles synthesized in the one-pot methods described herein may include a vulcanizable shell and a crosslinked core. The monomers that comprise the shell may be curable by vulcanization by sulfur or peroxide. Examples of suitable sulfur vulcanizing agents include "rubber maker's" soluble sulfur; elemental sulfur (free sulfur); sulfur donating vulcanizing agents such as organosilane polysulfides, amine disulfides, polymeric polysulfides or sulfur olefin adducts; and insoluble polymeric sulfur. Related prior patents and publications U.S. patent 6,437,050 (Bridgestone Corp.) and Macromol. Symp. 118, 143-148 (1997) disclose some suitable sulfur vulcanizing agents.

In a variety of exemplary embodiments, the shell may be made up of any suitable conjugated diene or mixture thereof. C₄-C₈ 1,3-conjugated diene monomers are the most preferred. Specific examples of the shell monomers include, but are not limited to, 1,3-butadiene, isoprene (2-methyl-1,3-butadiene), cis-and trans-piperylene (1,3-pentadiene), 2,3-dimethyl-1,3-butadiene, 1,3-pentadiene, cis- and trans- 1,3-hexadiene, cis- and trans-2-methyl- 1,3-pentadiene, cis-and trans-3-methyl-1,3-pentadiene, 4-methyl-1,3-pentadiene, 2,4-dimethyl-1,3-pentadiene, and the like, and the mixture thereof. In certain embodiments, isoprene or 1,3-butadiene or mixture thereof is used as the shell monomer.

The crosslinked core of the nanoparticles is typically formed when mono-vinyl aromatic monomers are cross-linked with a cross-linking agent. The weight ratio between the mono-vinyl aromatic monomers and cross-linking agent may broadly range from about 95:5 to about 0:100, from about 90:10 to about 25:75, or from about 85:15 to about 60:40.

Suitable mono-vinyl aromatic monomers include, but are not limited to those generally containing from 8 to 20, preferably from 8 to 12 carbon atoms, and may be selected, for example, from: styrene; 1-vinylnaphthalene; 2-vinylnaphthalene; various alkyl, cycloalkyl, aryl, alkylaryl or arylalkyl derivatives of styrene such as, for example, α.-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof. In certain embodiments, the mono-vinyl aromatic monomer comprises styrene.

In certain embodiments, the micelles formed by the polymerization of mono-vinyl aromatic monomers and conjugated diene monomers are cross-linked to enhance the uniformity and permanence of shape and size of the resultant nanoparticle. In such embodiments, cross-linking agents comprise polyfunctional comonomers. In certain embodiments, cross-linking agents which are at least bifunctional, wherein the two functional groups are capable of reacting with vinyl-substituted aromatic hydrocarbon monomers are acceptable. Suitable polyfunctional comonomers are compounds having at least 2, preferably from 2 to 4 copolymerizable carbon-carbon double bonds, e.g. diisopropenylbenzene, divinylbenzene, divinyl ether, divinyl sulphone, diallyl phthalate, triallyl cyanurate, triallyl isocyanurate, 1,2-polybutadiene, N,N'-m-phenylenedimaleimide, N,N'-(4-methyl-m-phenylene)dimaleimide and/or triallyl trimellitate. Other compounds which can also be used are the acrylates and methacrylates of polyhydric, preferably di- to tetrahydric C₂-C₁₀ alcohols, e.g. ethylene glycol, 1,2-propanediol, 1,4-butanediol, 1,6-hexanediol, neopentyl glycol, glycerol, trimethylolpropane, pentaerythritol and sorbitol. It is also possible to use acrylates and methacrylates of polyethylene glycol having from 2 to 20, preferably 2 to 8, oxyethylene units. Examples of the acrylate containing cross-linking agents include bisphenol A ethoxylate diacrylate, (diethylene glycol) diacrylate, glycerol propoxylate triacrylate, poly(ethylene glycol) diacrylate, and trimethylol propane ethoxylate triacrylate. It is also possible to use polyesters composed of aliphatic di- and/or polyols, or else maleic acid, fumaric acid and/or itaconic acid.

The polymer nanoparticle synthesized in the one-pot methods described herein may be substantially spherical. The mean diameter of the spheres may be broadly within the range of from about 1 nm to about 200 nm, within the range of from about 5 nm to about 100 nm, within the range of from about 10 nm to about 80 nm, or within the range of from about 15 nm to about 70 nm.

The average molecular weight Mn of the poly(conjugated diene) block of the shell portion may be controlled within the range of from about 5,000 to about 500,000, or within the range of from about 5,000 to about 200,000, and most preferably within the range of from about 10,000 to about 100,000. The average molecular weight Mn of the uncrosslinked aromatic block may be controlled within the range of from about 5,000 to about 500,000, within the range of from about 5,000 to about 200,000, or within the range of from about 10,000 to about 100,000.

The number average molecular weight (Mn) of the entire nanoparticle may be controlled within the range of from about 10,000 to about 200,000,000, within the range of from about 50,000 to about 1,000,000, or within the range of from about 100,000 to about 500,000. The polydispersity (the ratio of the weight average molecular weight to the number average molecular weight) of the polymer nanoparticle may be controlled within the range of from about 1 to about 1.5, within the range of from about 1 to about 1.3, or within the range of from about 1 to about 1.2.

The Mn may be determined by using Gel Permeation Chromatography (GPC) calibrated with polystyrene standards and adjusted for the Mark-Houwink constants for the polymer in question. The Mn values used in the examples below were measured by GPC methods calibrated with linear polymers.

In one example, the core of the synthesized nanoparticles is relatively hard. That is, the core has a Tg of about 60°C or higher. In another example, the nanoparticles have a core that is relatively harder than the shell, for example, at least about 60°C higher than the Tg of the shell layer. In one example, the shell layer is soft. That is, the shell layer has a Tg lower than about 0°C. In one embodiment, the Tg of the shell layer is between about 0°C and about -100°C. Nanoparticles with hard cores and soft shells are particularly useful for reinforcing rubber compounds used for tire treads.

As known by those of skill in the art, the Tg of the polymers can be controlled by the selection of monomers and their molecular weight, styrene content, and vinyl content.

An illustrative composition comprising a liquid polymer/nanoparticle blend also includes (a) a rubber matrix, (b) an optional oil, and (c) one or more components selected from the group consisting of carbon black, silica, vulcanizing agent, vulcanization accelerator, tackifier resin, antioxidant, fatty acids, zinc oxide, wax, peptizer, vulcanization retarder, activator, processing additive, plasticizer, pigments, and antiozonant. Various rubber products such as tires and power belts may be manufactured based on this composition.

The nanoparticle/liquid polymer blend may be compounded with rubber by methods generally known in the rubber compounding art, such as mixing the rubbery matrix polymer and the nanoparticle/liquid polymer blend with conventional amounts of various commonly used additive materials, using standard rubber mixing equipment and procedures.

A vulcanized rubber product may be produced from the composition of the present invention by thermomechanically mixing the nanoparticle/liquid polymer blend, a rubbery matrix polymer, and conventional amounts of various commonly used additive materials in a sequentially step-wise manner in a rubber mixer, followed by shaping and curing the composition. Rubber articles such as tires may be manufactured from the composition made with the nanoparticle/liquid polymer blend described supra. Reference for this purpose may be made to, for example, U.S. Publication No. 2004/0143064 A1.

Polymers that may comprise the rubber matrix include natural and synthetic elastomers. The synthetic elastomers typically derive from the polymerization of conjugated diene monomers. These conjugated diene monomers may be copolymerized with other monomers such as vinyl aromatic monomers. Other rubbery elastomers may derive from the polymerization of ethylene together with one or more alpha.-olefins and optionally one or more diene monomers.

Useful elastomers include natural rubber, synthetic polyisoprene, polybutadiene, polyisobutylene-co-isoprene, neoprene, poly(ethylene-co-propylene), poly(styrene-co-butadiene), poly(styrene-co-isoprene), and poly(styrene-co-isoprene-co-butadiene), poly(isoprene-co-butadiene), poly(ethylene-co-propylene-co-diene), polysulfide rubber, acrylic rubber, urethane rubber, silicone rubber, epichlorohydrin rubber, and mixtures thereof. These elastomers can have a myriad of macromolecular structures including linear, branched and star shaped.

Oil has been conventionally used as a compounding aid in rubber compositions. Examples of oil include, but are not limited to, aromatic, naphthenic, and/or paraffinic processing oils. In some examples, it may be preferable to use low-polycyclic-aromatic (PCA) oils, particularly oils that have a PCA content of less than 3%. In certain embodiments, the liquid polymer portion of the blend described above is used along with the oil, is used to replace a portion of the oil, or is used to replace the entirety of the oil in a rubber compound. As such, a typical amount of oil may broadly range from about 0 phr to about 100 phr, from about 0 phr to about 70 phr, or from about greater than 0 phr to about 50 phr, based on 100 phr rubbery matrix in the rubber composition.

As a skilled artisan can appreciate, reinforcement of a rubber product may be reflected by a low strain dynamic modulus G', as can be measured according to ASTM-D 412 at 22°C. In certain embodiments, reinforcement of rubber products such as tires made from the composition of the present invention may be achieved by (i) incorporation of the nanoparticle/liquid polymer blend; (ii) partially replacing the oil with the nanoparticle/liquid polymer blend; or (iii) entirely replacing the oil with the nanoparticle/liquid polymer blend.

The nanoparticle/liquid polymer blend provides various rubber products with improved reinforcement and controllable hysteresis. By controllable hysteresis, it is meant that the hysteresis is increased or decreased, or remains roughly unchanged, comparing to the situation where oil is present in the composition, but no nanoparticle/liquid polymer blend is included in the composition. For example, G'(MPa) may be increased by at least about 0.3, alternatively at least about 1.5, or at least 3.0.

The energy loss of an elastomer is termed hysteresis, which refers to the difference between the energy applied to deform an article made from the elastomer and the energy released as the elastomer returns to its initial and undeformed state. Hysteresis is characterized by a loss tangent, tangent delta (tan δ), which is a ratio of the loss modulus to the storage modulus (i.e., the viscous modulus to the elastic modulus) as measured under an imposed sinusoidal deformation. The tan δ value can be measured, for example, with a TA Instrument ARES Rheometer.

Rubber products with improved reinforcement and suitable hysteresis may comprise with the nanoparticle/liquid polymer blend, in which the phr ratio between the component (a) liquid polymer and component (b) polymer nanoparticles is within the range of from about 1:99 to about 99:1, in another embodiment within the range of from about 20:80 to about 80:20, and in another embodiment within the range of from about 25:75 to about 40:60.

The illustrative rubber compositions described herein can be used for various purposes. For example, they can be used for various rubber compounds, such as a tire treadstock, sidewall stock or other tire component stock compounds. Such tires can be built, shaped, molded and cured by various methods that are known and will be readily apparent to those having skill in the art. In an embodiment, a molded unvulcanized tire is charged into a vulcanizing mold and then vulcanized to produce a tire, based on the composition and the procedure as described above.

The following examples are included to provide additional guidance to those skilled in the art in practicing the claimed invention. The examples provided arc merely representative of the work that contributes to the teaching of the present application.

### EXAMPLES

### Preparation of Nanoparticle /Liquid Polymer Blend

A two-gallon jacketed reactor was used as the reaction vessel. The following ingredients were used: 19.3% butadiene in hexane, 33% styrene in hexane, hexane, n-butyl lithium (1.6 M), oligomeric oxalanyl propane (1.6 M) (OOPs), isopropanol, butylated hydroxytoluene (BHT), and 80% divinylbenzene (DVB) purchased from Aldrich.

The reactor was sequentially charged with 2.25 kg (4.96 lbs) of hexane, 0.27 kg (0.59 lbs) of 33% styrene, and 1.62 kg (3.58 lbs) of 19.3% butadiene. This reactor was heated to 49°C (120°F) over about 15 minutes. When the reactor reached 47°C (117°F), 2.3 mL of n-butyl lithium (1.6 M) and 0.76 mL of OOPs (1.6 M), diluted with about 20 mL of hexane were added. The polymerization exothermed at 52.6°C (126.7°F) after three minutes. After one hour, the jacket of the reactor was set to 38°C (100°F) and 0.14 mL of isopropanol was added. After dropping a sample for analysis, additional n-butyl lithium (2.3 mL) was added to the reactor. A mixture of 140.2 g styrene blend and 28.5 mL of DVB was prepared and added to the reactor. The jacket temperature of the reactor was increased to 82°C (180°F). After three hours, the reactor temperature was brought down to 32°C (90°F) and the mixture was dropped in isopropanol containing BHT. The resulting solid was then filtered through cheesecloth and drum dried.

The liquid polymer portion was determined to have an Mn of 73,000 to 80,000. The nanoparticle portion was determined to have a Mn of 83,700. The synthesized blend contained 55wt% liquid polymer and 45wt% nanoparticles.

The nanoparticle/liquid polymer blend was much easier to isolate from solvent and dry than previously known methods of separately synthesizing the liquid polymer. However, with a sufficent amount of nanoparticles in the liquid polymer blend, a substantially solid blend results after coagulation, which can be drum-dried very easily.

### Preparation and Analysis of Example Rubber Compounds

Six rubber compositions were prepared according to the formulation shown in Tables 1 and 2. The first example was a control that contained no nanoparticles or liquid polymer to serve as a comparison with the test compounds. The second example was made using synthesized nanoparticles to replace 10 phr of styrene-butadiene rubber (SBR) in the compound formulation. The third example was made using nanoparticles and liquid polymer to replace 10 phr of SBR and about 15 phr of aromatic oil. Because the synthesized MNP/LP blend contained 55 wt% of the liquid polymer and 45 wt% of the nanoparticles, 22.2 phr of the MNP/LP blend and 2.8 phr of additional LP were used in the formulation in order to correctly match the desired composition.

To illustrate that the additional amount of LP is not a necessary component of the examples described herein, a fourth prophetic example is also presented. In the prophetic example 4, 25 phr of 40:60 MNP/LP blend is used. This prophetic example replaces the 10 phr of SBR with 10 phr of blended MNP and replaces the 15 phr of LP with 15 phr of blended LP without using additional LP by itself.

Three comparative examples were also prepared. Each of these examples use polybutadiene as the matrix rubber and use nanoparticles that were synthesized in a separate pot from the liquid polymer. Comp. Example 1 contained 15 phr of aromatic oil, but did not contain any nanoparticles or liquid polymer. Comp. Example 1 was used as a control (Control 2) and the results of the other comparative examples were normalized in relation to Comp. Example 1. Comp. Example 2 differs from Comp. Example 1 in that it replaces 15 phr of the polybutadiene with 15 phr of nanoparticles. Comp. Example 3 differs from Comp. Example 1 in that it replaces 15 phr of polybutadiene and 15 phr of aromatic oil with 15 phr of nanoparticles and 15 phr of butadiene liquid polymer.

**TABLE 1: Composition of Example Master Batches (in phr)**

| | Example 1 (Control 1) | Example 2 | Example 3 | Prophetic Example 4 | Comp. Example 1 (Control 2) | Comp. Example 2 | Comp. Example 3 |
|---|---|---|---|---|---|---|---|
| Polybutadiene¹ | 0 | 0 | 0 | 0 | 100 | 85 | 85 |
| SBR² | 100 | 90 | 90 | 90 | 0 | 0 | 0 |
| Carbon Black (N343) | 50 | 50 | 50 | 50 | 50 | 50 | 50 |
| Aromatic Oil | 15 | 15 | 0 | 0 | 15 | 15 | 0 |
| Zinc Oxide | 3.0 | 3.0 | 3.0 | 3.0 | 3.0 | 3.0 | 3.0 |
| Hydrocarbon Resin (tackifiers) | 2.0 | 2.0 | 2.0 | 2.0 | 2.0 | 2.0 | 2.0 |
| Santoflex 13 (antioxidants) | 0.95 | 0.95 | 0.95 | 0.95 | 0.95 | 0.95 | 0.95 |
| Stearic Acid | 2.0 | 2.0 | 2.0 | 2.0 | 2.0 | 2.0 | 2.0 |
| Wax | 1.0 | 1.0 | 1.0 | 1.0 | 1.0 | 1.0 | 1.0 |
| Nanoparticles (100wt% MNP)³ | 0 | 10 | 0 | 0 | 0 | 15 | 15 |
| Liquid Polymer/Nanoparticle⁴ | 0 | 0 | 22.2 | 0 | 0 | 0 | 0 |
| Liquid Polymer/Nanopartiel e⁵ | 0 | 0 | 0 | 25 | 0 | 0 | 0 |
| Liquid Polymer⁶ | 0 | 0 | 2.8 | 0 | 0 | 0 | 15 |

| | | | | | | | |
|---|---|---|---|---|---|---|---|
| ¹Trade Name HX301 from Firestone Polymers (Mw of 150,000, 12% vinyl, 40 Mooney viscosity) ²Trade Name HX263 from Firestone Polymers (Mw of 261kg/mol, Mw/Mn of 2.30, 23.8% styrene by weight, 35% cis 1,4,52% trans 1,4, and 13% 1,2 vinyl) ³Nanoparticles prepared as described in U.S. 2007/0142550 A1, which is hereby incorporated by reference. ⁴45% nanoparticles and 55% liquid polymer ⁵40% nanoparticles and 60% liquid polymer ⁶Polybutadiene with Mn of 80,000, prepared as described in U.S. 2007/0142550 A 1 | | | | | | | |

**TABLE 2: Additional Additives to Final Batch Composition (in phr)**

| | Example 1 (Control 1) | Example 2 | Example 3 | Prophetic Example 4 | Comp. Example 1 (Control 2) | Comp. Example 2 | Comp. Example 3 |
|---|---|---|---|---|---|---|---|
| Sulfur | ∼1.3 | ∼1.3 | ∼1.3 | ∼1.3 | ∼1.3 | ∼1.3 | ∼1.3 |
| Cyclohexyl-benzothiazole sulfenamide (accelerator) | 1.4 | 1.4 | 1.4 | 1.4 | 1.4 | 1.4 | 1.4 |
| Diphenylguanidine (accelerator) | 0.20 | 0.20 | 0.20 | 0.20 | 0.20 | 0.20 | 0.20 |

In each example, a blend of the ingredients was kneaded by the method listed in Table 3. The final stock was sheeted and molded at 165°C for 15 minutes.

**TABLE 3: Mixing Conditions**

| | |
|---|---|
| Mixer: 300g Brabender | |
| Agitation Speed: 60 rpm | |
| Master Batch Stage | |
| Initial | 110°C |

| Temperature | |
|---|---|
| 0 min | charging polymers |
| 0.5 min | charging oil and Carbon Black |
| 5.0 min | drop sample for analysis |

| Final Batch Stage | |
|---|---|
| Initial Temperature | 75°C |
| 0 min | charging master stock |
| 0.5 min | charging curing agent and accelerators |
| 1.25 min | Drop sample for analysis |

**Table 4: Analysis of Examples**

| | Example 1 (control 1) | Example 2 | Example 3 | Comp. Example 5 (control 2) | Comp. Example 6 | Comp. Example 7 |
|---|---|---|---|---|---|---|
| Ring Tensile Strength | | | | | | |
| Tensile Break Stress 23°C Tb (Normalized) | 100 | 118 | 129 | 100 | 110 | 115 |
| Elongation at Break 23°C (Eb %) (Normalized) | 100 | 105 | 94 | 100 | 100 | 90 |
| 300% Modulus 23°C (M300) (Normalized) | 100 | 113 | 145 | 100 | 112 | 134 |
| 50% Modulus 23°C (M50) (Normalized) | 100 | 114 | 144 | 100 | 115 | 139 |
| | | | | | | |
| Tg of Compound (extropolated from tan δ) | -45°C | -43 °C | -40°C | | | |
| | | | | | | |
| Rolling Resistance | | | | | | |
| tan δ 50°C (Normalized) | 100 | 110 | 98 | 100 | 105 | 96 |
| G' 50°C (Normalized) | 100 | 135 | 156 | 100 | 122 | 129 |

Measurement of the tensile strength and hysteresis loss were taken of the example vulcanized rubber compositions. The results are shown in Table 4. Measurement of tensile strength was performed according ASTM-D 412.

For examples 1, 2, and 3, the test specimen geometry was in the form of a ring of a width of 13 mm (0.05 inches) and of a thickness of 19 mm (0.075 inches). The specimen was tested at a specific gauge length of 25 mm (1.0 inch). Hysteresis loss was measured with a Dynastat Viscoelastic Analyzer. set at a frequency of 1 Hz and 1% strain. The geometry of the specimen for this test was a cylinder of a length of 15 mm and a diameter of 10 mm.

For examples 5, 6, and 7 the test specimen geometry was taken in the form of a ring of a width of 0.05 inches and of a thickness of 0.075 inches. The specimen was tested at a specific gauge length of 1.0 inches. The hysteresis loss was measured with a TA Instrument ARES Rheometer. Test specimen geometry was taken in the form of a cylinder of a length of 15 mm and of a diameter of 9 mm. The following testing conditions were employed: frequency 5 Hz, 1% strain.

## Claims

1. A method for preparing a one-pot synthesized blend of nanoparticles and liquid polymer in a solvent, the method comprising the steps of:
(a) in a reaction vessel, polymerizing either a first monomer to form a liquid polymer, or copolymerizing the first monomer and a second monomer to form the liquid polymer;
(b) partially terminating the polymerization with a quenching agent; and
(c) adding a polyfunctional comonomer, a mono-vinyl aromatic monomer, and an optional charge of polymerization initiator to polymerize the mono-vinyl aromatic monomer and the unpolymerized first monomer and second monomer;
wherein said nanoparticles have a core including the polymerized mono-vinyl aromatic monomer and a shell comprising the polymerized first monomer or the first and the second polymerized monomer.

2. The method of claim 1, wherein the quenching agent partially terminates the polymerization such that 20 to 95% of the polymers chains are terminated.

3. The method of claim 1, further comprising the step of filtering and drum drying the one-pot synthesized blend of nanoparticles and liquid polymer.

4. The method of claim 1, wherein the second monomer is selected from the group consisting of styrene, α-methyl styrene, 1-vinyl naphthalene, 2-vinyl naphthalene, 1-α-methyl vinyl naphthalene, 2-α-methyl vinyl naphthalene, vinyl toluene, methoxystyrene, t-butoxystyrene, and alkyl, cycloalkyl, aryl, alkaryl; and aralkyl derivatives thereof in which the total number of carbon atoms in the derivative is not greater than 18, or any di- or tri-substituted aromatic hydrocarbons, and mixtures thereof.

5. The method of claim 1, wherein the first monomer is a conjugated diene.

6. The method of claim 5, wherein the first monomer is selected from the group consisting of C₄-C₈ conjugated dienes and mixtures thereof.

7. The method of claim 1, wherein the nanoparticles are crosslinked with the polyfunctional comonomer.

8. The method of claim 1, wherein the cross-linking agent is selected from the group consisting of diisopropenylbenzene, divinylbenzene, divinyl ether, divinyl sulphone, diallyl phthalate, triallyl cyanurate, triallyl isocyanurate, 1,2-polybutadiene, N,N'-m-phenylenedimaleimide, N,N'-(4-methyl-m-phenylene)dimaleimide and/or triallyl trimellitate. acrylates and methacrylates of polyhydric, C₂-C₁₀ alcohols, acrylates and methacrylates of polyethylene glycol having from 2 to 20 oxyethylene units and polyesters composed of aliphatic di- and/or polyols, or maleic acid, fumaric acid and/or itaconic acid.

9. The method of claim 8, wherein the cross-linking agent is divinylbenzene.

10. The method of claim 1, wherein the first monomer is butadiene and the second monomer is styrene.

11. The method of claim 1, wherein the core of the nanoparticle has a Tg of about 60°C or higher.

12. The method of claim 1, wherein the shell of the nanoparticle has a Tg lower than about 0°C.

13. The method of claim 1, wherein the shell of the nanoparticle has a Tg between about 0°C and about -70°C.

14. The method of claim 1, wherein the core of the nanoparticle has a Tg of at least about 60°C higher than the Tg of the shell.

15. The method of claim 1, wherein the liquid polymer has an Mw of about 10,000 to about 120,000.

16. The method of claim 1, wherein the nanoparticles are formed by micelle self-assembly.

17. The method of claim 15, wherein the nanoparticles have a core comprising styrene cross-linked with divinylbenzene and a shell comprising butadiene.

18. The method of claim 1, wherein the cross-linking agent is added before the polymerization initiator and mono-vinyl aromatic monomer.

19. The method of claim 1, wherein the quenching agent is selected from the group consisting of methanol, ethanol, propanol, and isopropanol.

20. The method of claim 1, wherein the quenching agent is a functionalizing agent.

21. The method of claim 20, wherein the functionalizing agent is tin tetrachloride.

22. The method of claim 1, wherein the polymerizing or copolymerizing of step (a) are initiated with an anionic initiator.

23. The method of claim 1, wherein the steps are performed in the same reaction vessel.

24. A method for making a rubber composition, the method comprising:
making a blend of nanoparticles and liquid polymer according of claim 1; and
adding the blend to a rubber composition.

25. A method for making a tire with nanoparticles and liquid polymer, the method comprising:
making a blend of nanoparticles and liquid polymer according to claim 1;
adding the blend to a rubber composition;
molding the rubber composition into a tire tread; and
constructing a tire using the tire tread.

26. A composition of matter obtainable by the method of claim 1 consisting essentially of:
core-shell type, micellar nanoparticles; and
a liquid polymer having a Mw of about 10,000 to about 120,000;
wherein the nanoparticles are dispersed and blended within the liquid polymer.

27. The composition of matter of claim 26, wherein the nanoparticles and liquid polymer are present in a ratio of 25:75 to 40:60.

## Patentansprüche

1. Verfahren zum Präparieren einer Eintopfsynthese-Mischung von Nanopartikeln und einem flüssigen Polymer in einem Lösungsmittel, wobei das Verfahren die folgenden Schritte umfasst:
(a) in einem Reaktionsgefäß Polymerisieren entweder eines ersten Monomers zur Bildung eines flüssigen Polymers oder Ko-Polymerisieren des ersten Monomers und eines zweiten Monomers zur Bildung des flüssigen Polymers;
(b) partielles Terminieren der Polymerisation mit einem Quenchmittel; und
(c) Zugabe eines polyfunktionellen Ko-Monomers, eines aromatischen mono-Vinylmonomers und wahlweise Beladung mit einem Polymerisationsinitiator, um das aromatische mono-Vinylmonomer und das unpolymerisierte erste Monomer und das unpolymerisierte zweite Monomer zu polymerisieren;
wobei die Nanopartikel einen Kern einschließlich des polymerisierten aromatischen mono-Vinylmonomers und eine Hülle besitzen, die das polymerisierte erste Monomer oder das polymerisierte erste und zweite Monomer umfassen.

2. Verfahren nach Anspruch 1, wobei das Quenchmittel teilweise die Polymerisation terminiert, so dass 20 bis 95% der Polymerketten terminiert sind.

3. Verfahren nach Anspruch 1, das weiter den Schritt des Filtrierens und des Trocknens der Eintopfsynthese-Mischung von Nanopartikeln und flüssigem Polymer in einer Trockentrommel umfasst.

4. Verfahren nach Anspruch 1, wobei das zweite Monomer aus der Gruppe ausgewählt ist, die aus Styren, α-Methylstyren, 1-Vinylnaphthalin, 2-Vinylnaphthalin, 1-α-Methylvinylnaphthalin, 2-α-Methylvinylnaphthalin, Vinyltoluol, Methoxystyren, t-Butoxystyren und Akyl-, Cycloalkyl- Aryl-, Alkaryl- und Aralkylderivaten davon, bei denen die Gesamtzahl von Kohlenstoffatomen in den Derivaten nicht größer als 18 ist, oder einem beliebigen aromatischen di- oder trisubstituierten Kohlenwasserstoff und Gemischen davon besteht.

5. Verfahren nach Anspruch 1, wobei das erste Monomer ein konjugiertes Dien ist.

6. Verfahren nach Anspruch 5, wobei das erste Monomer aus der Gruppe ausgewählt ist, die aus konjugierten C₄-C₈-Dienen und Mischungen davon besteht.

7. Verfahren nach Anspruch 1, wobei die Nanopartikel mit dem polyfunktionellen Ko-Monomer vernetzt sind.

8. Verfahren nach Anspruch 1, wobei das Vernetzungsmittel aus der Gruppe ausgewählt ist, die aus Diisopropenylbenzol, Divinylbenzol, Divinylether, Divinylsulphon, Diallylphthalat, Triallylcyanurat, Triallylisocyanurat, 1,2-Polybutadien, N,N'-m-Phenylendimaleimid, N,N'-(4-Methyl-m-phenylen)dimaleimid und/oder Triallyltrimellitat, Acrylaten und Methacrylaten von mehrwertigen C₂-C₁₀-Alkoholen, Acrylaten und Methacrylaten von Polyethylenglycol mit 2 bis 20 Oxyethylen-Einheiten und Polyestern, die aus aliphatischen Di- und/oder Polyolen oder Maleinsäure, Fumarsäure und/oder Itaconsäure zusammengesetzt sind, besteht.

9. Verfahren nach Anspruch 8, wobei das Vernetzungsmittel Divinylbenzol ist.

10. Verfahren nach Anspruch 1, wobei das erste Monomer Butadien und das zweite Monomer Styren ist.

11. Verfahren nach Anspruch 1, wobei der Kern des Nanopartikels eine Tg von mindestens ca. 60 °C aufweist.

12. Verfahren nach Anspruch 1, wobei die Hülle des Nanopartikels eine Tg von maximal ca. 0 °C aufweist.

13. Verfahren nach Anspruch 1, wobei die Hülle des Nanopartikels eine Tg von ca. -70 °C und 0 °C aufweist.

14. Verfahren nach Anspruch 1, wobei der Kern des Nanopartikels eine Tg von mindestens ca. 60 °C über der Tg der Hülle aufweist.

15. Verfahren nach Anspruch 1, wobei das flüssige Polymer ein Mw von ca. 10.000 bis 120.000 aufweist.

16. Verfahren nach Anspruch 1, wobei die Nanopartikel durch Mizellen-Selbstassemblierung gebildet werden.

17. Verfahren nach Anspruch 15, wobei die Nanopartikel einen Kern besitzen, der Styren vernetzt mit Divinylbenzol und eine Hülle umfasst, die Butadien umfasst.

18. Verfahren nach Anspruch 1, wobei das Vernetzungsmittel vor dem Polymerisationsinitiator und dem aromatischem mono-Vinylmonomer zugegeben wird.

19. Verfahren nach Anspruch 1, wobei das Quenchmittel aus der Gruppe ausgewählt ist, die aus Methanol, Ethanol, Propanol und Isopropanol besteht.

20. Verfahren nach Anspruch 1, wobei das Quenchmittel ein funktionalisierendes Mittel ist.

21. Verfahren nach Anspruch 20, wobei das funktionalisierende Mittel Zinntetrachlorid ist.

22. Verfahren nach Anspruch 1, wobei das Polymerisieren oder Ko-Polymerisieren von Schritt (a) mit einem anionischen Initiator initiiert wird.

23. Verfahren nach Anspruch 1, wobei die Schritte in demselben Reaktionsgefäß ausgeführt werden.

24. Verfahren zur Herstellung einer Gummi-Zusammensetzung, wobei das Verfahren Folgendes umfasst:
Herstellen einer Mischung von Nanopartikeln und flüssigem Polymer nach Anspruch 1; und
Zugabe der Mischung zu einer Gummi-Zusammensetzung.

25. Verfahren zur Herstellung eines Reifens mit Nanopartikeln und flüssigem Polymer, wobei das Verfahren Folgendes umfasst:
Herstellen einer Mischung von Nanopartikeln und flüssigem Polymer nach Anspruch 1;
Zugabe der Mischung zu einer Gummi-Zusammensetzung;
Gießen der Gummizusammensetzung zu einem Reifenprofil; und
Konstruieren eines Reifens unter Verwendung des Reifenprofils.

26. Zusammensetzung von Material, die nach Verfahren 1 erhältlich ist, die im Wesentlichen aus Folgendem besteht:
mizellären Nanopartikeln vom Kern-Hülle-Typ; und
einem flüssigen Polymer mit einem Mw von ca. 10.000 bis ca. 120.000;
wobei die Nanopartikel dispergiert und mit dem flüssigen Polymer gemischt sind.

27. Zusammensetzung von Material nach Anspruch 26, wobei die Nanopartikel und das flüssige Polymer in einem Verhältnis von 25:75 bis 40:60 vorliegen.

## Revendications

1. Procédé de préparation d'un mélange synthétisé en récipient unique de nanoparticules et de polymère liquide dans un solvant, le procédé comprenant les étapes de :
(a) dans un récipient de réaction, polymériser soit un premier monomère pour former un polymère liquide, soit copolymériser le premier monomère et un second monomère pour former le polymère liquide ;
(b) terminer partiellement la polymérisation par un agent de désactivation ; et
(c) c) ajouter un comonomère polyfonctionnel, un monomère mono-vinyl aromatique et une charge facultative d'amorceur de polymérisation pour polymériser le monomère mono-vinyl aromatique et les premier monomère et second monomère non polymérisés ;
lesdites nanoparticules ayant un coeur comprenant le monomère mono-vinyl aromatique polymérisé et une écorce comprenant le premier monomère polymérisé ou le premier et le second monomère polymérisé.

2. Procédé de la revendication 1, dans lequel l'agent de désactivation termine partiellement la polymérisation de telle sorte que 20 à 95 % des chaînes polymères sont terminés.

3. Procédé de la revendication 1, comprenant en outre l'étape de filtration et séchage au tambour du mélange synthétisé en récipient unique de nanoparticules et de polymère liquide.

4. Procédé de la revendication 1, dans lequel le second monomère est choisi dans le groupe consistant en styrène, α-méthyl styrène, 1-vinyl naphtalène, 2-vinyl naphtalène, 1-α-méthyl vinyl naphtalène, 2-α-méthyl vinyl naphtalène, vinyl toluène, méthoxystyrène, t-butoxy styrène, et les dérivés alkylés, cycloalkylés, arylés, alkarylés et aralkylés de ceux-ci, le nombre total d'atomes de carbone dans le dérivé n'étant pas supérieur à 18, ou tous hydrocarbures aromatiques di- ou tri-substitués, et leurs mélanges.

5. Procédé de la revendication 1, dans lequel le premier monomère est un diène conjugué.

6. Procédé de la revendication 5, dans lequel le premier monomère est choisi dans le groupe consistant en diènes conjugués en C₄-C₈ et leurs mélanges.

7. Procédé de la revendication 1, dans lequel les nanoparticules sont réticulées par le comonomère polyfonctionnel.

8. Procédé de la revendication 1, dans lequel l'agent de réticulation est choisi dans le groupe consistant en diisopropénylbenzène, divinylbenzène, divinyl éther, divinyl sulfone, phtalate de diallyle, cyanurate de triallyle, isocyanurate de triallyle, 1,2-polybutadiène, N,N'-m-phénylènedimaléimide, N,N'-(4-méthyl-m-phénylène)dimaléimide et/ou trimellitate de triallyle, les acrylates et méthacrylates d'alcools en C₂-C₁₀ polyvalents, les acrylates et méthacrylates de polyéthylène glycol ayant de 2 à 20 unités oxyéthylène et les polyesters composés de di- et/ou polyols aliphatiques, ou d'acide maléique, d'acide fumarique et/ou d'acide itaconique.

9. Procédé de la revendication 8, dans lequel l'agent de réticulation est le divinylbenzène.

10. Procédé de la revendication 1, dans lequel le premier monomère est le butadiène et le second monomère est le styrène.

11. Procédé de la revendication 1, dans lequel le coeur de la nanoparticule a une Tg d'environ 60°C ou plus.

12. Procédé de la revendication 1, dans lequel l'écorce de la nanoparticule a une Tg inférieure à environ 0°C.

13. Procédé de la revendication 1, dans lequel l'écorce de la nanoparticule a une Tg entre environ 0°C et environ -70°C.

14. Procédé de la revendication 1, dans lequel le coeur de la nanoparticule a une Tg d'au moins environ 60°C de plus que la Tg de l'écorce.

15. Procédé de la revendication 1, dans lequel le polymère liquide a une Mw d'environ 10 000 à environ 120 000.

16. Procédé de la revendication 1, dans lequel les nanoparticules sont formées par autoassemblage de micelles.

17. Procédé de la revendication 15, dans lequel les nanoparticules ont un coeur comprenant du styrène réticulé par du divinylbenzène et une écorce comprenant du butadiène.

18. Procédé de la revendication 1, dans lequel l'agent de réticulation est ajouté avant l'amorceur de polymérisation et le monomère mono-vinyl aromatique.

19. Procédé de la revendication 1, dans lequel l'agent de désactivation est choisi dans le groupe consistant en méthanol, éthanol, propanol et isopropanol.

20. Procédé de la revendication 1, dans lequel l'agent de désactivation est un agent de fonctionnalisation.

21. Procédé de la revendication 20, dans lequel l'agent de fonctionnalisation est le tétrachlorure d'étain.

22. Procédé de la revendication 1, dans lequel la polymérisation ou la copolymérisation de l'étape (a) sont amorcées par un amorceur anionique.

23. Procédé de la revendication 1, dans lequel les étapes sont effectuées dans le même récipient de réaction.

24. Procédé de fabrication d'une composition de caoutchouc, le procédé comprenant :
fabriquer un mélange de nanoparticules et de polymère liquide selon la revendication 1 ; et
ajouter le mélange à une composition de caoutchouc.

25. Procédé de fabrication d'un pneumatique avec des nanoparticules et un polymère liquide, le procédé comprenant :
fabriquer un mélange de nanoparticules et de polymère liquide selon la revendication 1 ;
ajouter le mélange à une composition de caoutchouc ;
mouler la composition de caoutchouc en une bande de roulement de pneumatique ; et
construire un pneumatique à l'aide de la bande de roulement de pneumatique.

26. Composition de matière pouvant être obtenue par le procédé de la revendication 1 consistant essentiellement en :
des nanoparticules micellaires de type coeur-écorce ; et
un polymère liquide ayant une Mw d'environ 10 000 à environ 120 000 ;
les nanoparticules étant dispersées et incorporées par mélange dans le polymère liquide.

27. Composition de matière de la revendication 26, dans laquelle les nanoparticules et le polymère liquide sont présents dans un rapport de 25:75. à 40:60.
